# EUROPEAN PATENT APPLICATION

(11) **EP 1 779 909 A2**
(43) Date of publication of application: **02.05.2007**
(21) Application number: 06255521.4
(22) Date of filing: 26.10.2006
(51) Int. Cl.: A63F 13/12

(54) **On-line, real-time game playing with search facility**

(30) Priority: 26.10.2005 US 260020
(71) Applicant: Waterleaf Ltd., 14 Athol Street Douglas Isle of Man IM1 1JA (GB)
(72) Inventor: Moshal, Martin Paul, Queens Mary Quay (GI)
(74) Representative: Butler, Michael John

(57) **Abstract**

A gaming application is disclosed which is executable by a computer workstation such as a general purpose computer. The workstation is linked to a central gaming server over a network such as the Internet. The application includes a search facility whereby a player can enter search criteria (essentially player preferences) in order to identify available instances of games that have attributes of interest. The search criteria data is sent to the gaming server. The gaming server searches a database of current on-line game instances and responds by sending a datagram containing data for instances of games meeting the search criteria, which are then displayed on the workstation. In one form, the search facility includes a "quick start" feature whereby the user can request that they directly join an instance of a game in progress which meets the search criteria. If the player used the "quick start" feature, and the gaming server found a match, the player is taken directly to the game instance.

## Description

This disclosure relates generally to methods and systems for providing on-line, real-time game playing over computer networks such as the Internet. More particularly, this disclosure relates to methods of enabling players to search for and join an on-line real-time game from a pool of available instances of games. Aspects of this invention allow players to locate and to join desired on-line real-time games from a multitude of on-line games coordinated by a gaming server in a more efficient manner than previously known. The invention is applicable to games generally, examples of which are multiplayer card games such as poker, black jack, and bridge, as well as multi-player video slots or other multiplayer wager games.

A system and method for playing games, such as card games, over a computer network is described in published PCT application WO 03/093921 A2, published November 13, 2003, which is assigned to the assignee of the present invention. The entire contents of WO 03/093921 A2 are incorporated by reference herein. The system of the '921 PCT publication includes a central gaming server accessible over the Internet and enables participation in games such as poker games by individuals accessing diverse portal websites (gaming websites).

In the last several years, systems have been commercialized such as described in the '921 patent publication wherein a gaming website provides a facility for on-line game playing, particularly on-line poker playing. Such systems have become quite popular and gaming sites may host hundreds, even thousands of players at a time. In on-line poker, the success of an on-line poker web site ("on-line poker room") is directly related to the magnitude of a pool of would-be players who desire to play a game of on-line poker. Simply put, the larger the pool of players, the more virtual poker tables (i.e. poker games each accommodating a maximum of, say, 10 players) the on-line poker software can spawn, thereby increasing the overall liquidity of the on-line poker room and increasing its attractiveness to other would-be players.

In order to maximize this size advantage, some on-line poker rooms operate under a centralized topology, in which there is a single operating entity ("operator") that owns and runs the gaming web site and the player pool is homogeneous (i.e. all players are registered with, or "belong to", this single operator). The operator makes its money by charging a proportion (a "rake") of the collective wagers ("the pot") of all players participating in each game of poker that is played in the on-line poker room. Under a centralized topology, a player will always be playing only with other players who are registered with the same (i.e. the only) operator. Settlement of player wagers is straightforward: 1) the operator deducts its rake from the pot; 2) the balance is paid over to the player that has won the game; and 3) the next game starts and the process repeats.

Other on-line poker rooms may operate under a distributed topology (also referred to, in the art, as a network topology). Under this topology, the player pool is heterogeneous, as players registered with different operators are pooled together to maximize liquidity of the collective player pool. This means that players registered with different operators could find themselves playing in the same poker game. In this instance settlement of player wagers is more complex than in the centralized topology as situations invariably arise in which funds have to be transferred, (or "cleared"), between different operators whose players are playing on the poker network involving a multitude of operators. The principles underlying a distributed topology are set forth in the above-referenced patent application WO 03/093921 A2. The present inventive methods apply to both the centralized and distributed topologies.

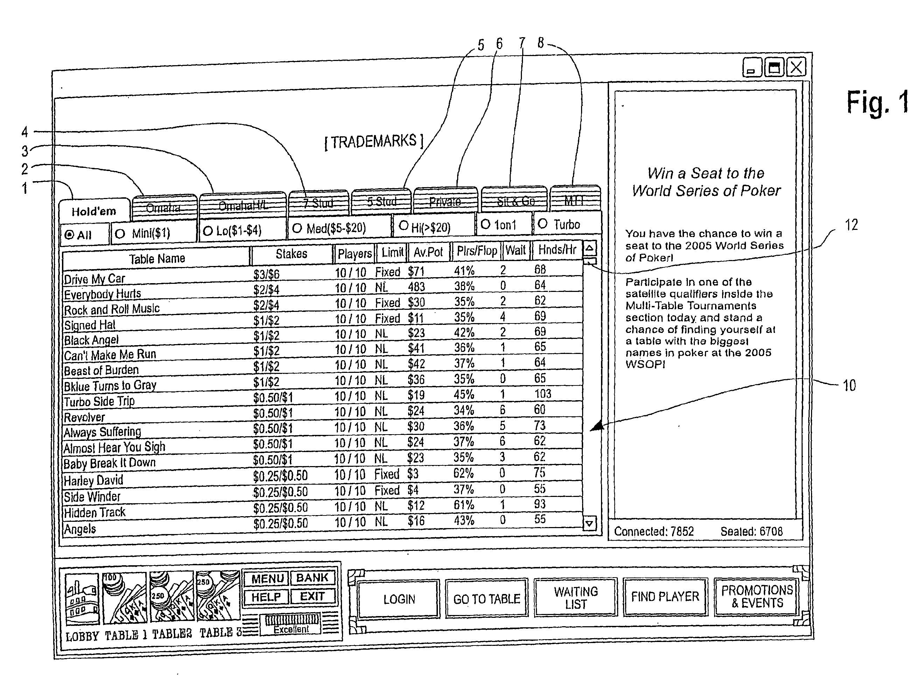

Figure 1 is a screen shot from an on-line poker room home or "lobby" page, showing a prior art arrangement for providing real time game information to a potential game player. The player accesses the gaming web site using a personal computer or other computing device with Internet access. As shown in Figure 1, the lobby is presented on the user interface of the computing device. The lobby presents a display of eight categories or types of card games that are currently available for play via the web site (either under a centralized or a distributed topology). Each game type is associated with a tab:
Tab 1) Hold'em - poker games of the Texas Hold'em variety;
Tab 2) Omaha - poker games of the Omaha variety;
Tab 3) Omaha H/L - poker games of the Omaha Hi/Lo variety;
Tab 4) 7 Stud - poker games of the 7-Card Stud variety;
Tab 5) 5 Stud - poker games of the 5-Card Stud variety;
Tab 6) Private - invitation-only poker games established by players;
Tab 7) Sit & Go - non-scheduled tournaments; and
Tab 8) MTT (Multi-Table Tournaments) - scheduled tournaments.

When any of the first five tabbed categories or types is selected, a player is presented with a list of all tables with poker games of that particular variation that are currently active. See Figure 1, which shows the tables for the Hold'em game (tab 1). For each active game instance (virtual table) in the list, the following attributes are displayed:
a) name of the table (typically, fanciful names to spark player interest, but may also be in the form of a number or index);
b) table stakes in the format: Small Blind/Big Blind;
c) number of Participating Players/Max number of Players that can be accommodated;
d) whether the table is a no limit table, a pot limit table or a fixed limit table;
e) average size of pots at that table;
f) average number of players who have not yet folded at the flop stage of the game;
g) number of players waiting to join the table; and
h) number of hands played per hour.
Note the scroll feature 10 of Figure 1. If the person scrolls down using the slide bar 12, additional virtual tables in the Hold-em category are presented. Note that there may be dozens, potentially hundreds, of tables available under this category. The user scrolls down to see all the available tables. This scroll feature is typically found in each of the game categories or tabs of Figure 1.

Sit & Go Tournaments (Tab 7 of Figure 1) are poker tournaments that have no pre-set start time and that commence when a prescribed number of players required for the tournament have entered the tournament. Sit-and-Go tournaments can be single-table or multi-table tournaments. When the Sit & Go tabbed category is selected, a player is presented with a list of all Sit & Go tournaments that are either active or are pending. For each Sit & Go tournament in the list, the following attributes are displayed:
a) a tournament identification code;
b) a name of the tournament;
c) a type of poker game played in the tournament;
d) whether the tournament is a no limit, pot limit or fixed limit tournament;
e) number of seats available in the tournament;
f) the current size of blinds for active tournaments, and the number of players already entered for pending tournaments.

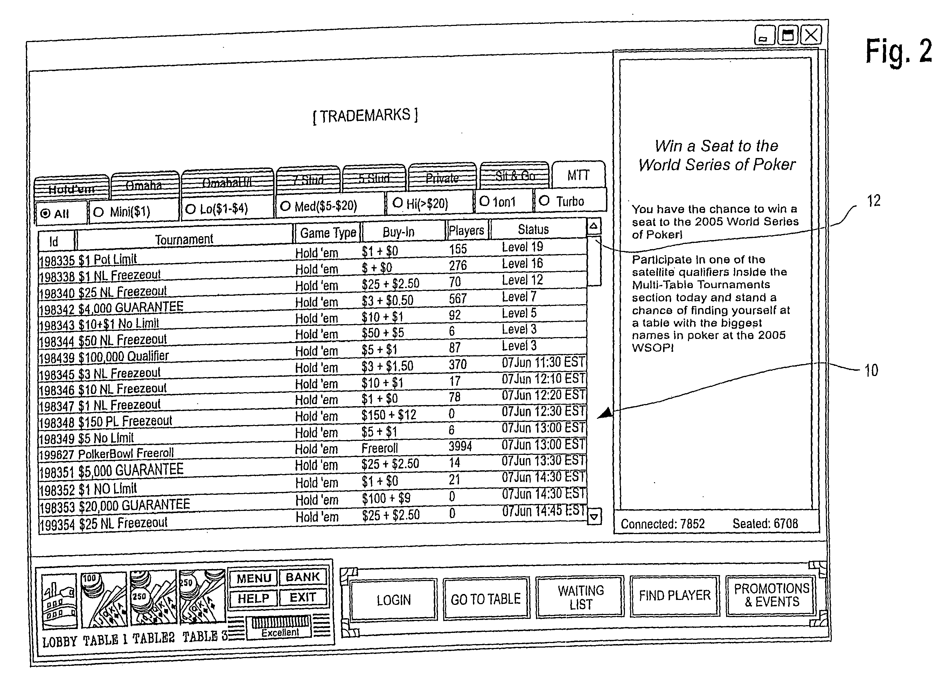

MTT (Tab 8 of Figure 1) are poker tournaments that have a scheduled start time. Players are required to enter the tournament and to be available to commence play in time for the scheduled start of the tournament. When the MTT tabbed category is selected, a player is presented with a list of all MTT tournaments (same instances) that are either active or are pending. See Figure 2. For each MTT tournament in the list, the following attributes are displayed:
a) a tournament identification code;
b) a name of the tournament;
c) a type of poker game played in the tournament;
d) buy-in rules;
e) number of entrants for the tournament; and
f) a current size of blinds for active tournaments and a scheduled start time for pending tournaments.

If one considers the amount of information displayed in the displays of Figure 1-2, and the fact that a multitude (hundreds or even thousands) of players and potential players may be simultaneously playing (particularly in a distributed topology where players registered with multiple different web site operators are pooled into one large pool), it is apparent that a substantial burden is placed on a central gaming server coordinating play to keep each player's lobby screen display updated with current information. The information displayed on each player's lobby screen is dynamic since players are continually joining and dropping out of games, and table statistics constantly change. For example, if a table that would appear from Figure 1 or Figure 2 to have one or more vacant "seats," dozens if not hundreds of persons may attempt to join the table within a span of a few minutes, especially in a period of high demand. As a result, vacant seats may be taken up in a matter of seconds. Persons who may think they are going to join a particular table may not be able to do so, as the information in Figure 1 or Figure 2 will be inaccurate as it might not yet have updated by a heavily loaded gaming server to indicate that there are no more vacant seats available. Similarly, the statistics on pot size, average payout, number of hands played per hour, etc. will change constantly and players expect this information to be up to date and accurate. However, given the dynamic nature of on-line gaming playing, such statistics may in fact change continuously. As a result, it is important that the lobby information presented to players accessing and using on-line gaming software be both current and accurate, and remain so on an ongoing basis. If it is not (for example, a player keeps trying to join a table that indicates a vacant seat, but is unable to do so), the player may get discouraged or frustrated and quit playing or log onto a different site.

To summarize, every player that is logged on to gaming website or a gaming system must be presented with all the data that can be displayed on the lobby page, as described above in Figures 1 and 2. The data on the lobby page is obtained from a central gaming server and transmitted to a player's client computing device by means of the Internet. The data is dynamic, since players may enter and leave non-tournament poker games at any time, new poker tables may be spawned by the poker server during periods of high player demand and may be collapsed and consolidated during times of low player demand. Further, tournaments commence and terminate, and numbers of players entered in tournaments change over time. This means that fresh data must be retransmitted from the gaming server to each computing device periodically. The data is, ideally, real-time (or substantially real-time), giving the player an accurate snapshot of the state of the poker network. Further, it is not uncommon for several thousand players to be connected and playing simultaneously during peak periods.

The net result of this situation is that the gaming server can be swamped by the load placed on it in servicing (i.e., updating) the lobby data tables (e.g., as shown in Figures 1 and 2) to the computers of all of the players that are logged in. The result of this overload may cause the responsiveness of the gaming server to degrade, i.e., slow down or even crash. The update frequency of the lobby data on each computer workstation consequently decreases, which results in unfortunate consequences such as, for example, a player wishing to join a poker table or a tournament on the basis of stale lobby data that indicates, say, that a vacant seat exists at that poker table or tournament but which, in reality, has no vacancies as the last remaining seat has already been taken up.

This problem of timely and accurate updating of client computers as to game or tournament information and game statistics, without degradation of gaming server performance, is one of scalability. Moreover, the more players that join the network the more load is placed on the central gaming server to provide updates. As more players join and the overload problem gets worse, the result may be that players stop playing or go elsewhere to play. Thus, this problem presents a bottleneck that seriously limits the ability of the gaming website operators to accommodate more players. The inability to accommodate more players diminishes the potential revenue of the gaming website operators.

The conventional solution to the problem is to utilize more server hardware. However, even this approach leaves something to be desired since it is more expensive to provide more server hardware, and even with more server hardware some degradation in performance may still occur during peak times, particularly as the number of participants in on-line gaming continues to grow. The art has failed to adequately address this problem.

A system that presents and updates information to players engaged in on-line gaming and that overcomes this problem and allows new levels of scalability to be achieved is described in U.S. patent application of the present inventor, serial no. 11/159,051 filed June 21, 2005, which is assigned to the assignee of the present invention. The '051 application is not admitted as describing prior art. The entire contents of the '051 application are incorporated by reference herein.

The system of the '051 application includes a gaming server that transmits game lobby pages to a multitude of distributed computing devices accessing a gaming website or websites over a network such as the Internet. In order to overcome the abovementioned scalability problems, game data in the lobby displays is transmitted as individual pages along with icons by which players can request additional pages for display. Updates are performed for only the displayed pages. This approach provides a significant improvement in server and network performance over prior techniques in which all game statistics for a particular type of game was sent to each workstation and the workstation would scroll through the entire data set as necessary to view all the game data.

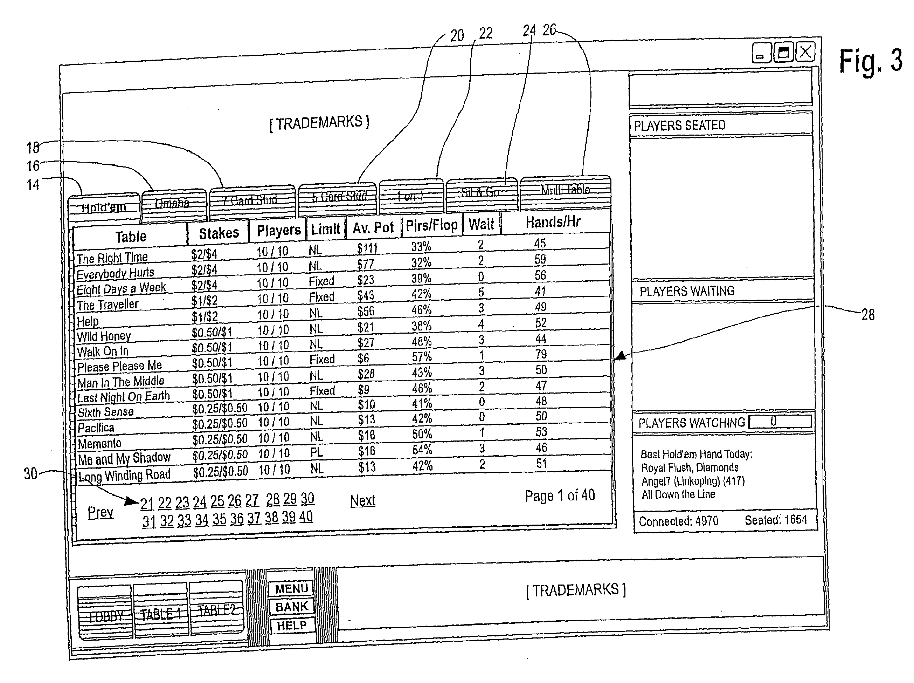

Figure 3 is a screen shot from an on-line poker room home or "lobby" page showing the arrangement for providing real-time game information as disclosed in the '051 application. As shown in Figure 3, the lobby presents a display of seven categories or types of card games that are currently available for play via the web site (either under a centralized or a distributed topology). Each game type is associated with a tab:
Tab 14) Hold'em - poker games of the Texas Hold'em variety;
Tab 16) Omaha - poker games of the Omaha variety;
Tab 18) 7 Card Stud - poker games of the 7-Card Stud variety;
Tab 20) 5 Card Stud - poker games of the 5-Card Stud variety;
Tab 22) 1 On 1 - poker games of the Heads-Up variety;
Tab 24) Sit & Go - non-scheduled tournaments; and
Tab 26) Multi Table - scheduled tournaments.
When any of the first four tabbed categories or types is selected, a player is presented with a list 28 of all tables with poker games of that particular variation that are currently active. See Figure 3, which shows the tables for the Hold'em variation (tab 14). In contrast with the lobby page of Figure 1, there is no scroll feature by which the player may view additional tables in the Hold'em category. Instead, page icons 30 are displayed by means of which the player can select additional lobby pages displaying additional tables in the Hold'em category.

When a particular lobby page such as that shown in Figure 3 is displayed, the page is periodically updated. The updating can be on a fixed period or it can be when there is any change in the underlying data, or both, and there is no need or occasion to update data for instances of the games that are not currently displayed. Accordingly, when the server sends the update page to the computing device displaying lobby pages, there is no updating of game information for non-displayed instances of games as there would be if scrolling were done as in Figures 1 and 2 in order to view all the instances of the selected game type. As a result, the processing burden on a gaming server continuously updating hundreds or thousands of computers all at the same time is substantially reduced, enabling improved server and poker network performance to surpass the capability of the prior art.

Although the system disclosed in the '051 application addresses the problem of scalability and server efficiency, a player is still faced with the problem of having to filter displayed game data, whether in scrollable or paged format, in order to locate a suitable on-line, real-time poker game to join, which suits the player's requirements or playing style. For example, the player may wish to join only a high stakes poker game, or may wish to join a poker game that has a larger number of participating players, or a game in which the pots for which the players compete are large relative to the table stakes. Such filtering can be time-consuming and tedious for a player, irrespective of whether the lobby game data displayed to the player in a scrollable window or by means of separate selectable pages of game data.

Keen poker players wish to spend more time playing the game and less time searching for a suitable game to join. It is desirable to provide a means to enable a player to commence play at an on-line, real-time poker game that is quick and convenient, and that minimizes any delay in enabling the player to commence play.

Viewed from a first aspect, a gaming application is provided which is executable by a computer workstation. The workstation is linked to a central gaming server over a network such as the Internet. The gaming application comprises a set of machine readable instructions stored on a memory device. The instructions comprise:
a) instructions for presenting on the workstation display a search facility whereby a player can enter search criteria or parameters identifying attributes of on-line games of interest to the player; and
b) instructions for transmitting the search criteria to the central gaming server, whereby the central gaming server may search a database of current on-line game instances to identify a set of at least one game instance meeting the search criteria.

The search facility may take the form of a search engine featuring a search icon displayable by the gaming application. When the player selects the icon, they are preferably presented with a dialog box where the player may indicate attributes for games they are interested, such as pot size, type of game, number of players, and so forth. The search criteria may vary depending on the type of game or games coordinated by the central gaming server. Examples are set forth below of search criteria pertaining to on-line wager games such as poker. As the invention is applicable to games generally, the search criteria discussed below are provided for purposes of illustration and not limitation.

In one preferred embodiment, the search criteria are stored in a memory in the workstation. The gaming application preferably displays a search icon, and in the event that search criteria are already stored in memory and the search icon is selected by the player, the instructions of the gaming application preferably transmit the stored search criteria to the gaming server. This feature eliminates the need to repeatedly enter search criteria, which, for most players, may remain the same over time.

In one preferred embodiment, the search facility includes a "quick start" facility whereby the user may indicate they wish to be directed automatically to a game instance meeting a player preference profile. The player preference profile is preferably essentially a set of search criteria specifying attributes of games that are of interest, such as pot size, the number of players at a table, buy-in amount, etc. The player preference profile used in the quick start facility may be the same as the search criteria used in the general search facility, or may differ.

Viewed from a second aspect, a method of facilitating selection of games for play by a remotely located player using a computer workstation is provided. The workstation is linked over a computer network to a central gaming server. The method includes a step of receiving at the gaming server a search request from the workstation, the search requests including search criteria data identifying attributes of games of interest to the player. The gaming server searches a database of current game instances for instances meeting the search criteria, and responsively provides to the workstation a datagram identifying one or more game instances meeting the search criteria.

Viewed from a third aspect, a "quick start" method is provided of automatically connecting a player with an on-line instance of a game, the player using a computer workstation linked to a central gaming server over a computer network. The method includes the steps of:
presenting to the player a display on the workstation wherein the player may enter one or more player preferences identifying attributes of games of interest to the player;
sending a first datagram to the gaming server containing the player preferences;
receiving the first datagram at the gaming server and responsively searching through a database containing instances of games to identify at least one game instance meeting the player preferences; and
returning a second datagram to the workstation which automatically directs the player to a game instance identified by the gaming server as meeting the player preferences.
In one preferred embodiment, player preferences entered at the workstation are stored on the workstation. Thereafter, the player may later select an icon indicating they wish to join an instance of a game meeting the stored player preferences and such selection causes a third datagram to be sent to the gaming server to prompt selection by the gaming server of an instance of a game meeting the player preferences. In this manner, the player may join a game meeting their preferences simply by one click of a button, e.g., a "quick start" icon or a "join table" icon, without having to scroll through large sets of game instances or viewing multiple pages of game instances to find one for they want play.

Viewed from a fourth aspect, a central gaming system is provided which facilitates searching of games for play by a player using a remotely located workstation. The gaming system includes a database storing data representing multiple instances of games. The gaming server takes the form of a processing unit executing machine readable instructions. The processing unit searches the database in response to search criteria transmitted to the gaming sever from the workstation in order to identify instances of games of interest to the player meeting the search criteria. The gaming server instructions cause the gaming server to transmit a datagram to the workstation identifying at least one instance of a game meeting the search criteria.

In one preferred embodiment, the gaming server is operative to join the workstation to an instance of a game meeting the search criterion automatically, e.g., when the search facility is in the form of a "quick start" or like feature.

Certain preferred embodiments will now be described by way of example only, with reference to the accompanying drawings, in which:
Figure 1 is a prior art lobby page displayed on a workstation by a client application providing for game playing over a computer network, the lobby page including a plurality of tabs corresponding to particular game types and under each tab a display of a plurality of instances of games of the selected game type, wherein scrolling is a tool for display of additional instances of games under the selected game type;
Figure 2 is a prior art lobby page displayed on a workstation by a client application providing for game playing, wherein in the user has selected the MTT (multi-table tournaments) and a number of instances of tournaments are displayed, again with scrolling being the tool for display of additional instances of the tournaments;
Figure 3 is a lobby page in which game instance information is displayed as a page of information and the user is provided with graphical user interface tools such as "next page", or page number icons to request additional pages;

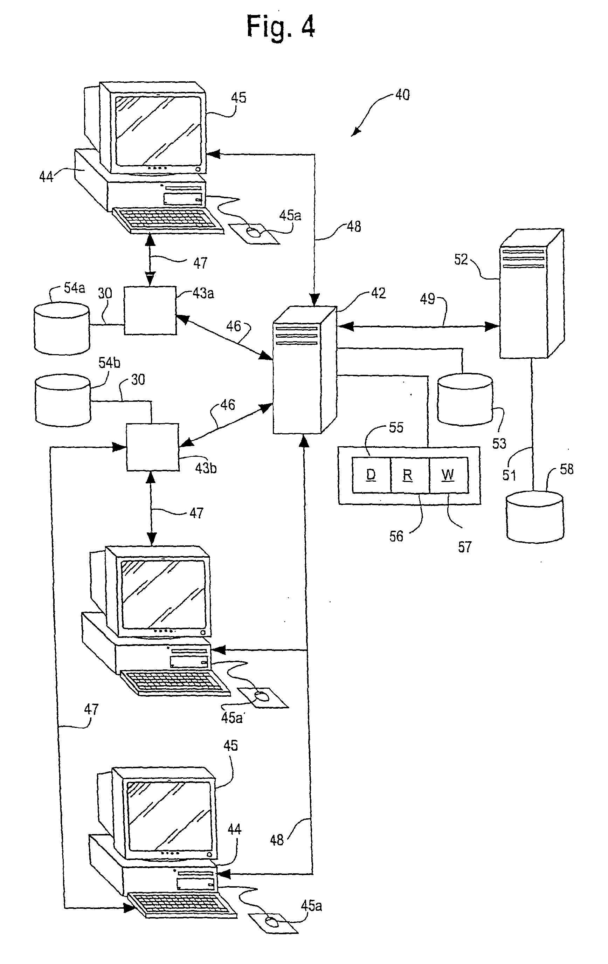

Figure 4 is a schematic diagram of a system for providing game playing for a plurality of distributed computing devices, in which a central server provides lobby page data to the distributed computing devices using the techniques of this disclosure. While Figure 4 shows a distributed network topology, the principles of this disclosure are applicable to a centralized topology;

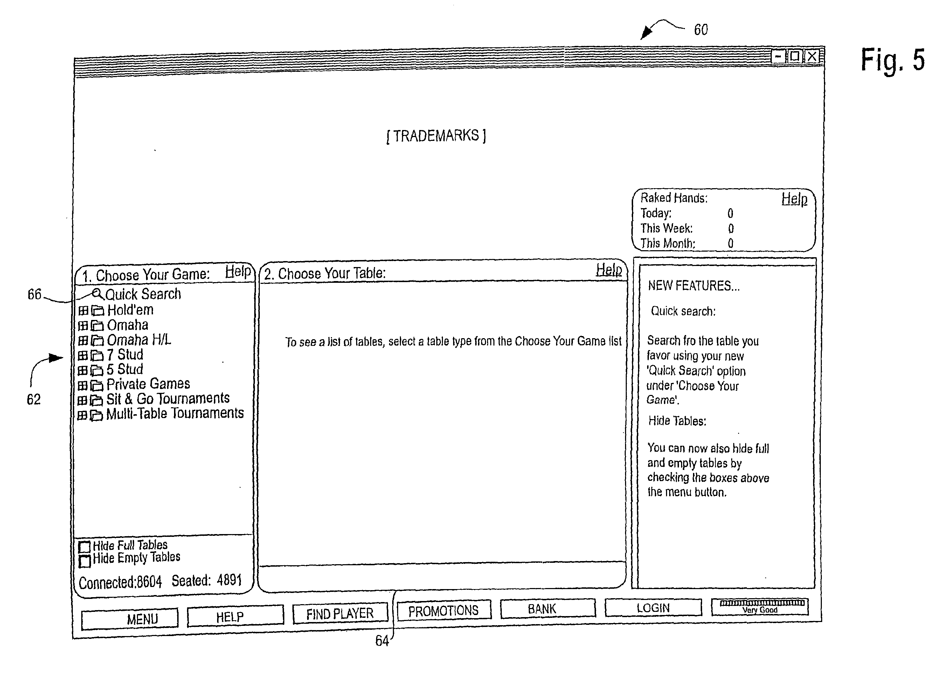

Figures 5-12 are examples of a search feature in the form of a search engine configurable to locate a subset of instances of games and tournaments of a selected game type that possess predetermined characteristics or attributes specified by a player. The use of the search engine as shown in Figures 5 to 12 has been discovered to solve the screening problems associated with the design of the lobby pages of Figures 1 to 3; and

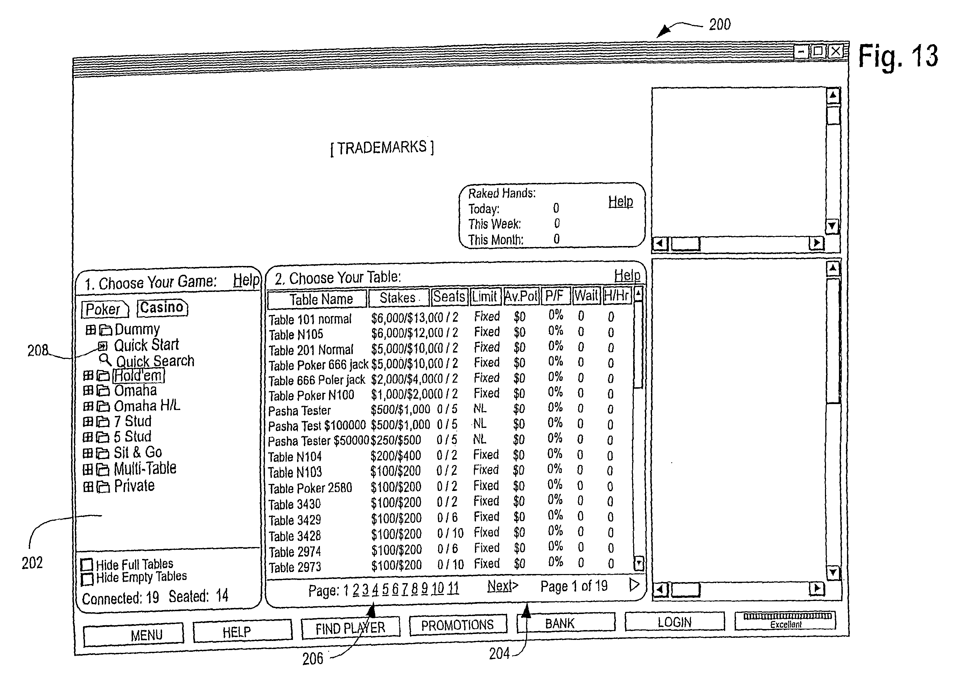

Figures. 13-15 are examples of pages having a "quick start" search feature enabling a player to have the gaming server search for a game instance meeting player preferences and automatically join the player to a game instance (e.g., game or tournament instance) that possesses characteristics matching the preference profile.

### Overview

The present disclosure provides for new methods of facilitating a player locating and joining desired on-line real-time games from a multitude of available on-line games that are coordinated by a gaming server and that are accessible through an on-line gaming site in a more efficient manner than prior art methods.

In one aspect, the solution presented by this disclosure is to provide a gaming client application which has a search facility, e.g., in the form of a search engine, which is configurable by a player to locate a subset of all available instances of an on-line real-time game that are coordinated by a gaming server and that conform to search parameters or criteria selected by the player. Various embodiments of the search facility are shown in Figures 5 to 12 and will be described in detail subsequently. It has been discovered that screening all available instances of the on-line real-time game to identify a subset thereof that possess certain predetermined characteristics, as described herein, enables a player to more quickly locate a suitable instance of the on-line real-time game to join relative to known prior art methods.

In one example, the search facility is in the form of a search engine wherein the player can identify attributes or criteria for games that are of interest to the player. For example, the player invokes the search engine by clicking a search icon on the game lobby page (as shown in Figures 1-3), which causes a dialog box to be presented to the player. The player can, by means of the dialog box, configure search parameters relating to a type of on-line real-time game that the player wishes to play. Once a player has configured the search parameters, a search engine operated by the central gaming server screens all available instances of the on-line real-time game to locate a subset thereof comprising those game instances that match the search parameters. The subset of games located by the search engine is displayed to the player, and the player is then able to select one of the game instances in the displayed search results in order to join the game. For example, the player places their cursor over a displayed instance and clicks the mouse, whereupon the player is presented with the game instance and joins the play.

The solution to the player search problem described herein has been successful in that it allows a player to locate a suitable instance of an on-line real-time gave from all available instances of the game more quickly than can be achieved by means of an unstructured search through raw game data, whether in scrollable or in paged format.

In another aspect, the search facility presented by this disclosure includes a feature, "quick start" herein, whereby a player can have the gaming server search for and automatically join the player to an instance of an on-line real-time game meeting search criteria. Such search criteria may be considered or viewed as a player preference profile, basically criteria for games that the player is interested in joining. Examples of this feature are shown in Figures 13 to 15 and will be described in detail subsequently.

For example, the player invokes the search and quick start feature by clicking on a "quick start" icon on the game lobby page (as shown in Figures 1-3). On the first occasion that the player clicks the "quick start" icon on the lobby page, a dialog box is presented to the player. The dialog box enables the player to configure search criteria or parameters relating to a type of on-line real-time game that the player wishes to play. Once the player has configured game preference parameters, these are stored locally on the workstation for subsequent use. When stored preference parameters already exist, the player is taken, after clicking the icon on the game lobby page, to an instance of the on-line real-time game that matches the player's stored preferences, either after obtaining the player's confirmation to do so, or automatically, without confirmation. The player can alter the stored preference parameters at any stage.

The solution to the problem of enabling a player to quickly commence game play has been achieved by way of transmitting a player preference profile to a gaming server which uses the player preference profile to select a game instance and automatically, or nearly so, joining the player to a game that matches the profile. Moreover, in the situation where the player profile is stored in a permanent or semi-permanent fashion in the gaming workstation, they can later join a game meeting their preferences with only one or two clicks of the mouse. For example, they could activate an icon indicating they wish to use the "quick start" feature, and then click "join game" or "join tournament". The stored player preference profile is transmitted to the gaming server and the server automatically searches for a currently active game instance meeting the criteria specified in the player preference profile. The gaming server returns a datagram to the workstation joining the player to a selected game meeting the player's preference profile. Such a feature greatly streamlines the process of a player joining a game having gaming characteristics of interest to them. The need for displaying multiple lobby pages at the workstation, or scrolling through a long list of tables or pages of a given game type to find a game of interest is eliminated entirely.

Before describing the various embodiments in greater detail, an explanation will be provided first of a computer-based system for on-line game playing, in which multiple distributed computing devices engage in playing of card games using a central server and, in particular, wager games such as poker. The following description is offered by way illustration, and not limitation, of one possible environment in which the invention can be practiced.

Referring to Figure 4, a system for playing a game of multiplayer poker is indicated generally by reference numeral 40. The system 40 includes a central gaming server 42, and a number of portals 43a, 43b in the form of portal websites on the World Wide Web of the Internet. In this embodiment each one of the portal websites is an on-line casino website hosted on a corresponding casino web server (not shown). Each one of the on-line casino websites 43a, 43b is accessible by a would-be poker player (not shown) through a user access facility 44 in the form of computing device such as an Internet-enabled computer workstation having a display 45 and an associated pointing device 45a, such as a mouse or, alternatively, a touchpad. In this embodiment, the on-line casino website 43a is shown as having one computer workstation 44 logically connected thereto, whereas casino website 43b is shown as being logically connected to two computer workstations 44. It will be appreciated by those skilled in the art that such an on-line casino websites 43a, 43b can be logically connected to any desired number of such computer workstations 44 simultaneously, which number is physically limited primarily by considerations of processing power, website hardware, and Internet access bandwidth.

The gaming server 42 includes a processing unit (such as a central processing unit, not shown) and a database 53 coupled to the processing unit which stores game information data for a plurality of instances of games played by the workstations 44. The database 53 is updated continuously to store real-time or near real time information as to the plurality of instances of games, such as the name of each instance (e.g., table name), the players at each table, the stakes, available seats, waiting time, etc. The gaming server 42 provides the game information data (lobby pages) to the distributed computing devices 44, in the form of pages. The pages include icons or tools by which the users of the devices 44 can request additional pages. Additionally, the server 42 transmits periodic updates to displays of instances of games (e.g., lobby pages) to the plurality of distributed computing devices 44 by means of transmitting pages of updated data. Game information for instances of a game type that are not currently displayed in the lobby page are not periodically updated on the plurality of distributed computing devices 44, as would be the case with a scrolling solution as shown in Figures 1 and 2. Accordingly, the ability of the server 42 to update the plurality of distributed computing devices 44 in real time or substantial real time without substantial degradation in performance of the gaming server 42 is achieved.

The gaming server 42 further includes software functioning as a search engine or screening function to sort instances of games stored on the database 53 to find ones meeting search criteria, as explained below.

The system 40 includes, further, an administration facility 52 in the form of an application server, which is communicable with the gaming server 42 along a communication network 49. Although the operation of the application web server 52 will be outlined briefly in the description that follows, further details are not particularly pertinent to the present discussion and the reader is directed to the published '932 PCT application cited above for further reference.

The gaming server 42, the on-line casino web servers (not shown) corresponding to the on-line casino websites 43a, 43b, the computer workstations 44 and the application web server 52 are capable of communicating with each other by means of an open communication network that is, in this embodiment, the Internet. The Internet is represented in Figure 4 as separate logical communication networks (46, 47, 48 and 49).

The application web server 52 provides a clearing account facility 58 (e.g., database) that has a clearing account corresponding to each one of the on-line casino websites 43a, 43b. Analogously, each on-line casino websites 43a, 43b includes a corresponding credit account facility 54a, 54b with a credit account corresponding to each player who participates in the game of poker through a computer workstation 44 logically connected to that casino website. In the illustrated embodiment, therefore, the credit account facility 54a has one player credit account associated with it, while credit account facility 54b has two associated player credit accounts. The manner of clearing accounts among the operators of the web sites 53a, 53b is not particularly important and is described in the aforementioned published '921 PCT application.

The gaming server 42 operates under control of a server-stored program (not shown) capable of enabling a predetermined maximum number, say 8 or 10, of players to play an instance of the game of multiplayer poker. Each instance of the game may take the form of a virtual card table playing a particular game (e.g., Hold'em) or virtual game tournament, such as a virtual poker tournament. When the number of players for a given instance of a game reaches this predetermined maximum number, the server-stored program causes a further instance of the game to be initiated (e.g., a new virtual poker table), the new instance of the game also being capable of accommodating a further 10 players. In this manner the gaming server is capable, under server-stored program control, to spawn as many separate instances of the game of multiplayer poker as required in order to accommodate a pool of players who desire to play the game, in groups of a maximum of 10. Each instance of the game spawned in this manner is treated as totally independent of the other instances.

The on-line casino websites 43a, 43b enable a player who desires to join the game of multiplayer poker to request, by means of one of the computing devices 44, participation in the game and, once admitted to an instance of the game, to place a wager on a turn of that instance of the game. During the play, each participating player is presented with an identical graphical user interface (GUI) on his respective computing device 44 by a separate, locally stored, program in the computing device. The GUI presents to the player a suitable display of a poker game (not shown) with appropriate activatable icons that enable the player to make his own desired game play decisions and to monitor the progress of the multiplayer game by viewing the game play decisions of the other participating players in the same instance of the game.

The server-stored program also provides a wagering means 57 in the form of computer instructions operable by any participating player to place a wager on a turn of the game, as well as a discrimination means in the form of computer instructions 55 capable of determining whether any wager placed by anyone of the participating players on the turn of the instance of the game of multiplayer poker is successful or unsuccessful. The stored program in the gaming server 42 also maintains a dynamic register 56 of all players admitted to, and actively participating in, all the spawned instances of the poker game from time to time, together with data representative of a corresponding portal 43a, 43b through which each participating player accessed the game. The dynamic register 36 also contains data representative of an instance of the game in which the player is participating. The application web server 52 also settles the wagers of the participating players after the completion of every turn of any instance of the game.

As a part of this dynamic register 56, or using a separate mechanism such as a state engine or state machine, the gaming server 42 preferably keeps track of the current screen display of each computing device 44. Consequently, when a lobby page is displayed on a computing device 44, the gaming server 42 knows what update needs to occur on the computing device (i.e., which is the current page displayed on each computing device and therefore which updated page to transmit to the client process for display). Such updated pages are constructed by reference to the stored game instance data in the database 53.

The computing devices 44 may take the form of a conventional personal computer operating under a Windows, Linux, or Macintosh operating system, provisioned with a web browser and a connection to the Internet. The computing devices 44 may also take the form of portable, hand-held computing devices with a web browser and wireless Internet access. The gaming server 42 may also operate under a Windows NT or other conventional operating system.

A game of multiplayer poker using a computing device or workstation 44 is facilitated by means of workstation-stored client gaming application or program (not shown) referred to, for convenience, as a client process that is executable on a computer workstation 44, and a corresponding server-stored program (not shown), or server process, that is executable on the gaming server 42. The server process (not shown) generates one or more random events that affect the outcome of the game of poker, such as the dealing of cards to participating players. The client process (not shown) obtains the result of the random events from the gaming server 42, across the communication network 48 and displays the outcome of the game on the display monitor 45 in an intelligible manner.

In order to play multiplayer poker or other games from any computer workstation 44, the client process (not shown) must first be downloaded, e.g., from the gaming server 42 (or from the web site 43a or 43b) to that computer workstation. Such download will typically occur when the computing device 44 first accesses the home page of the web site 43a and 43b, and the user is presented with a message asking the user whether they wish to download the client process in order to play the games. The user selects a "Yes" icon and the download then proceeds. The client process is then launched and communication between the computing device 44 and the gaming server 42 then proceeds. In a distributed topology scenario, a player wishing to participate in the multiplayer games such as poker uses a computing device 44 to access an on-line casino website 43a, 43b of his choice, but regardless of their choice of website the user is presented with the same underlying client process. The client processes will typically have different trademarks, color schemes, or "look and feel" depending on which on-line casino website they downloaded the client process from.

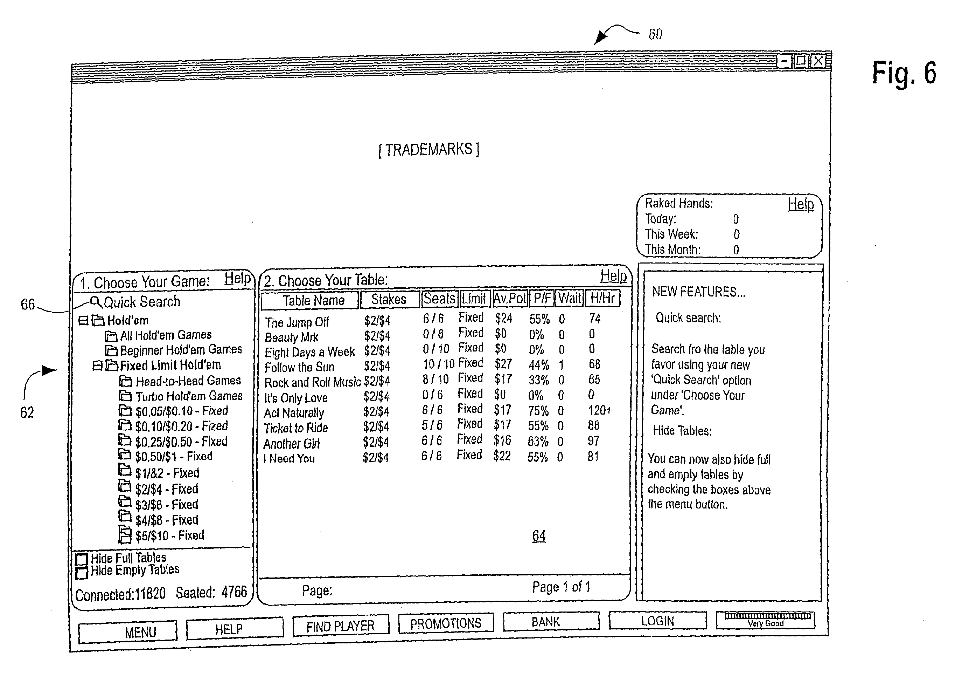

Referring now to Figure 5 and 6, an example of a lobby page 60 is shown. The lobby page provides information as to a variety of game types that are shown in a pane 62 on the lobby page. The game types in this example are wager type card games, including Hold'em, Omaha, Omaha Hi/Lo, 7 Card Stud, 5 Card Stud, Private poker games, Sit and Go poker tournaments and Multi-table poker tournaments. A player selects one of the poker game types that is of interest and a further pane 64 displays information on individual instances of games in the selected game type. The instances in pane 64 in this example are individual virtual poker tables. The pane 64 shows statistics or data for each game instance, such as the name of the table, the stakes, the number of available seats and the number of players currently at the table, the table limit, average pot size, etc. In the example of Figure 6, the game instances are $2/$4, Fixed Limit, Hold'em virtual poker tables, some of which are empty (no players). The data in the pane 64 of the lobby page is, essentially, in the form of a page of data, wherein the amount of data to show in the pane 64 is such that it fits in the available space in the pane 64 and scrolling is not necessary. In the example of Figure 6, data in the pane 64 is contained in a single page, but normally the pane 64 includes page icons (not shown) by which the user can select an additional page, go back a page, go forward a page, request the first page, request the last page, etc.

When the computing device 44 accesses the gaming server 42, it is provided with the main lobby page shown in Figure 5. In order to locate an instance of the game to play, a player is required to use a navigation tree provided in pane 62 of the lobby display. The player is first required to select the type of game in which the player wishes to participate, for example games of the Hold'em variety in Figure 6, followed by a sub-category of that particular game type, for example Fixed Limit games in Figure 6, followed by games with a certain stake size, for example $2/$4 games in Figure 6. Once the player has traversed the navigation tree in the pane 62 to a desired degree of resolution, a list of game instances having the selected characteristics is displayed in the pane 64, and the player is then ordinarily required to select a particular instance of the game to join and in which to participate.

### Quick Search

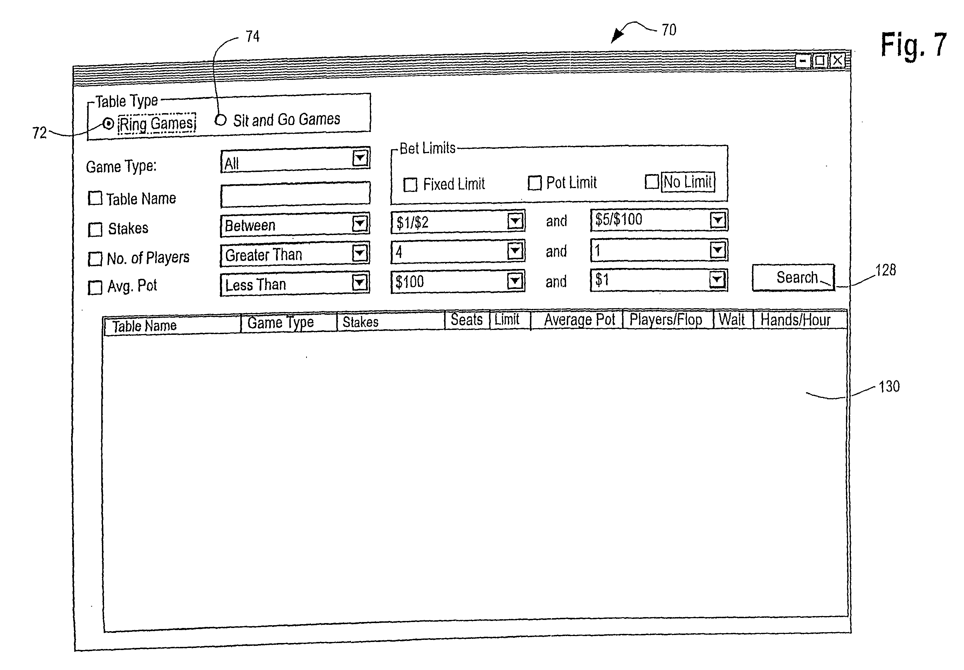

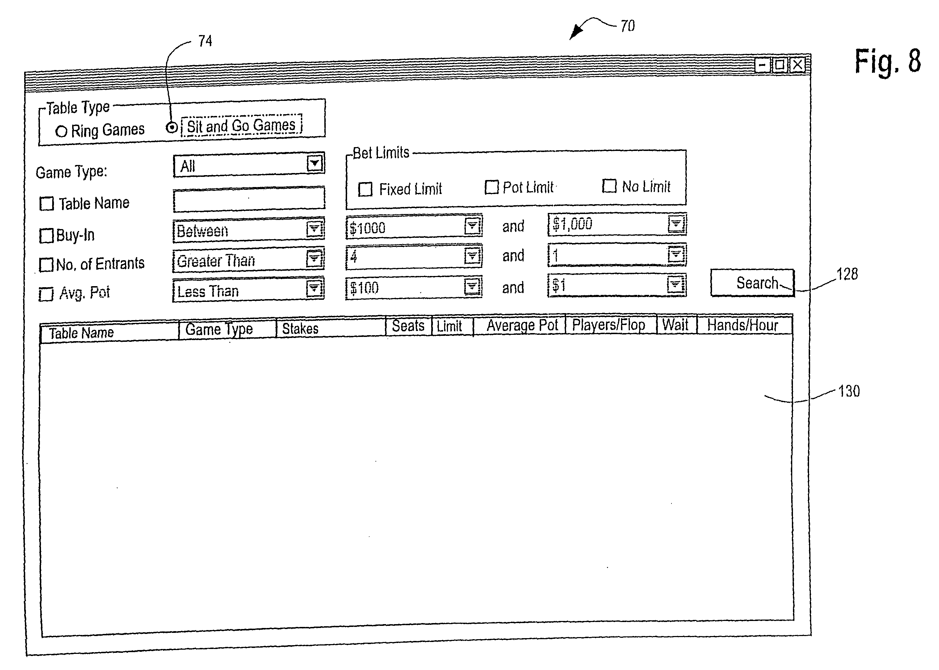

In order to enable the player to more quickly find a game instance to join, the pane 62 in the lobby page 60 contains a search icon 66 labeled "Quick Search". When the player clicks the Quick Search icon 66 in the pane 62 of the lobby page 60, a dialog box 70 is displayed to the player on the computing device 44, as shown in Figures 7 and 8.

The dialog box 70 allows a player to configure search parameters relating to a class or type of instance of an on-line real-time poker game that the player wishes to play. Firstly, the player is able to select a class of games to play, e.g., whether the player wishes to find a ring game or a Sit and Go game to play. A ring game is one in which a player is free to enter or to leave the poker game at any time, without restriction, while a Sit and Go game is one which continues until a desired objective is reached such as, for the example, the emergence of an overall winner in terms of a set of game rules. In order to search for a ring game, the player checks a "radio button" 72 in the dialog box 70, as illustrated in Figure 7. In order to search for a Sit and Go game, the player checks a "radio button" 74, as illustrated in Figure 8.

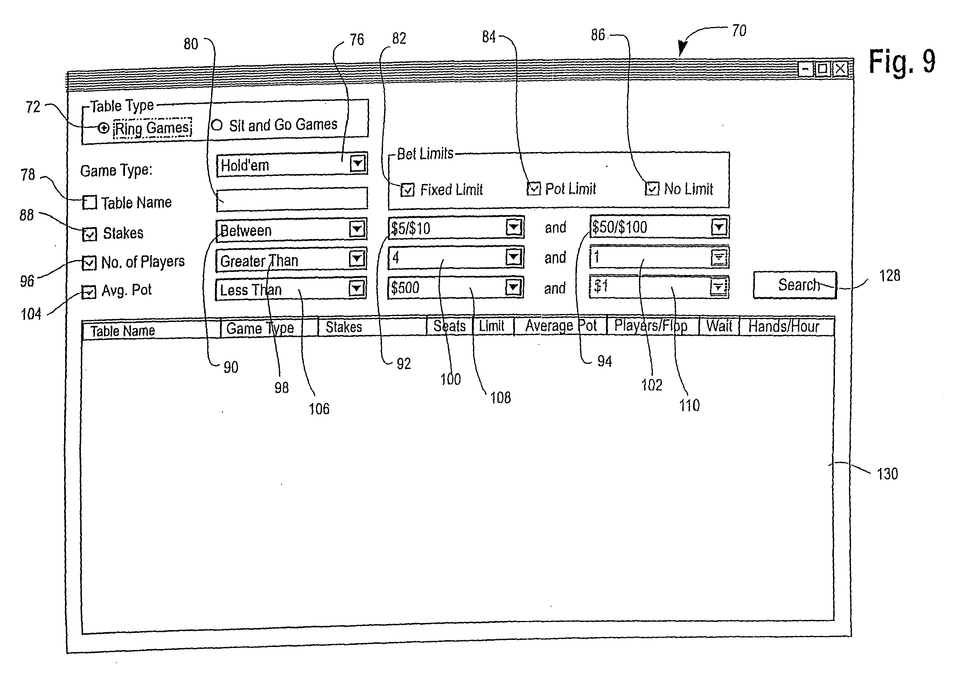

Referring now to Figures 7 and 9, in order to locate a desired ring game, the player may configure the following search criteria or parameters in the dialog box 70:
● a game type, selected from drop-down list 76 in which the choices are Hold'em, Omaha, Omaha H/L, 7 Stud, and 5 Stud, corresponding to the particular types of poker games previously discussed;
● a particular table name of a ring game, by checking box 78 and entering the desired table name in field 80;
● desired bet limits, by checking any one or more of a Fixed Limit check box 82, a Pot Limit check box 84 and a No Limit check box 86. A Fixed Limit poker game is one in which participating players may not wager or raise more than a predetermined amount, whereas in a Pot Limit poker game, wagers or raises are limited only by the amount of money in the pot at the time the wager is made. In a No Limit game, a player may wager or raise any amount, limited only by the player's bankroll.
● desired table stakes, by checking box 88 and constructing a search condition by means of drop-down lists 90, 92 and 94. The choices in drop-down list 90 are "BETWEEN", "GREATER THAN", "LESS THAN" and "EQUAL TO", while those in drop-down lists 92 and 94 correspond to predefined table stakes ranging between "$0.05/$0.10" and "$100/$200". An example of such a search condition is "games with table stakes BETWEEN "$5/$10 and$50/$100", as illustrated in Figure 9.
● a desired number of players in the game instance, by checking box 96 and constructing a search condition by means of drop down lists 98, 100 and 102. An example of such a search condition is "games having a number of players GREATER THAN 4", as illustrated in Figure 9.
● a desired average pot size, by checking box 104 and constructing a search condition by means of drop-down lists 106, 108 and 110. An example of such a search condition is "games having an average pot size LESS THAN $500", as illustrated in Figure 9.

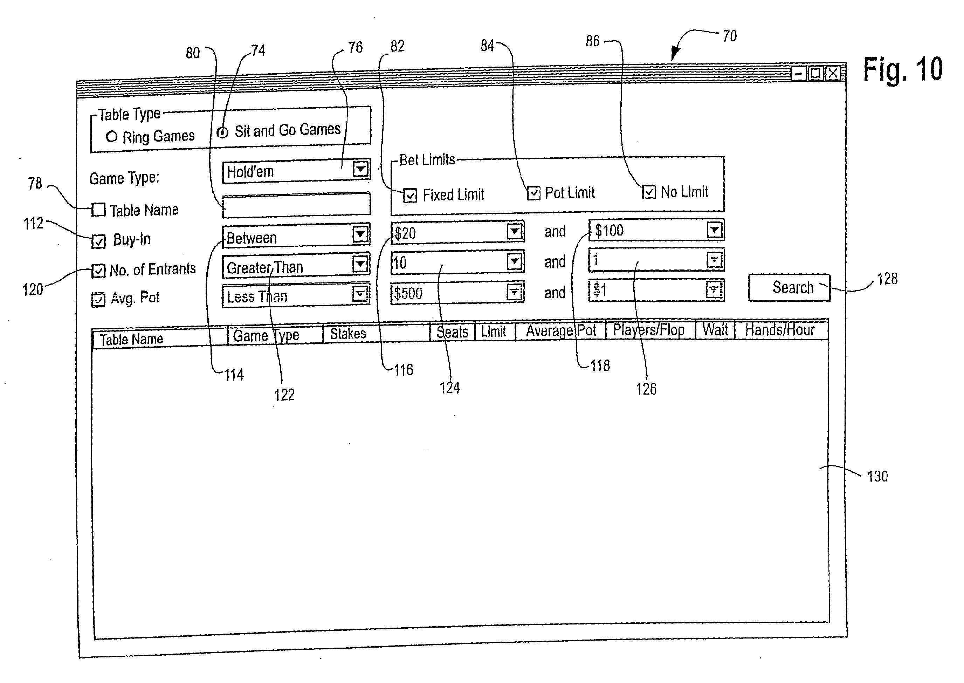

Referring to Figures 8 and 10, in order to locate a desired Sit and Go game, the player is able to configure the following search criteria in the dialog box 70:
● a game type selected from drop-down list 76 in which the choices are Hold'em, Omaha, Omaha H/L, 7 Stud and 5 Stud;
● a particular name of a Sit and Go game, by checking box 78 and entering the desired table name in field 80;
● desired bet limits, by checking any one or more of a Fixed Limit check box 82, a Pot Limit check box 84 and a No Limit check box 86;
● a desired buy-in, or entry fee, for the game, by checking box 112 and constructing a search condition by means of drop-down lists 114, 116 and 118. The choices in drop-down list 114 are "BETWEEN", "GREATER THAN", "LESS THAN" and "EQUAL TO", while those in drop-down lists 116 and 118 correspond to predefined buy-in amounts ranging from $1 to $10 000. An example of such a search condition is "games with buy-in stakes BETWEEN $20 and $100", as illustrated in Figure 10.
● a desired number of entrants in the game or tournament instance, by checking box 120 and constructing a search condition by means of drop-down lists 122, 124 and 126. An example of such a search condition is "games having a number of entrants GREATER THAN 10", as illustrated in Figure 10.

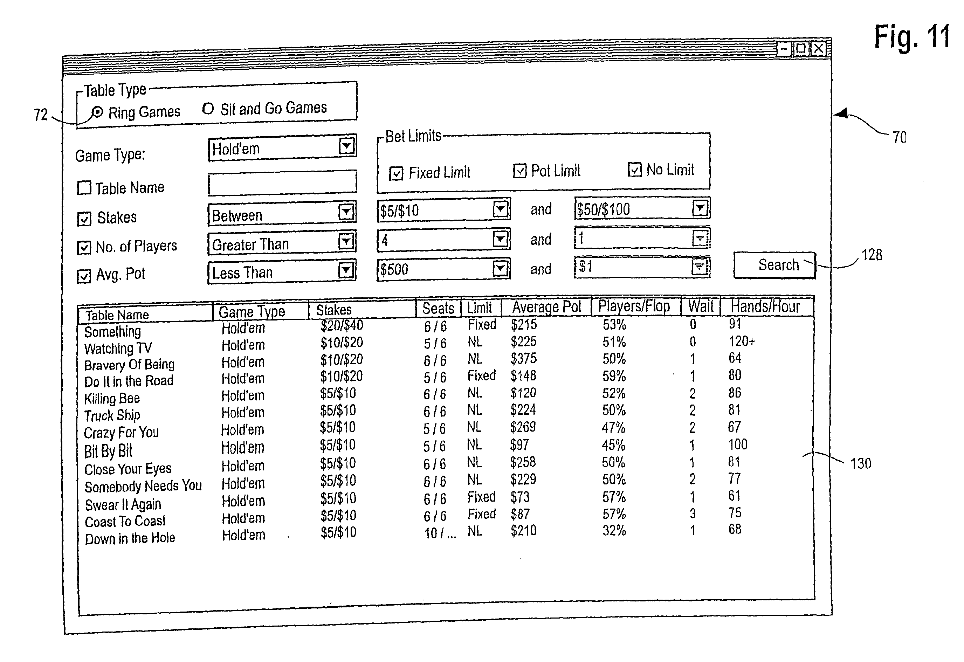

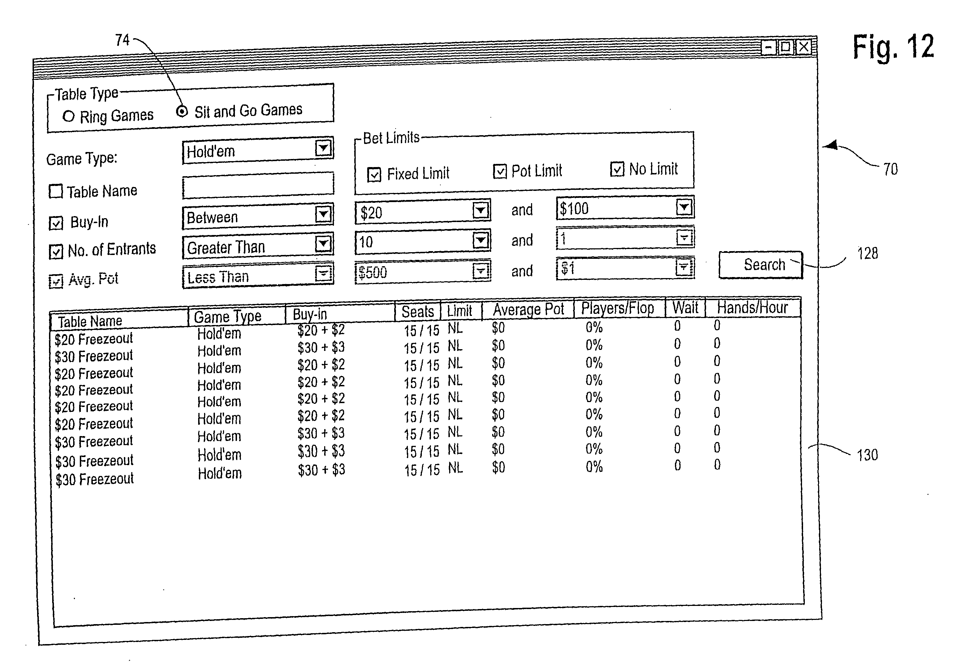

When the player has configured the search criteria as desired, either as described above, for example, with reference to Figure 9 or Figure 10, the player initiates a search for games that meet the search parameters by activating a "SEARCH" icon 128 in the dialog box 70. The computer workstation 44 then creates a search parameter file (not shown) containing the search parameters that have been configured by the player, and stores the search parameter file on a local storage device (not shown) such as a hard disk drive. The computer workstation 44 also transmits the search parameter file (not shown) to the gaming server 42, which receives the search parameter file and searches the stored game instance data in the database 53 to locate all current instances of the poker game that match the player's search parameters contained in the search parameter file (not shown). The gaming server 42 then transmits game data relating to all matching instances of the poker game to the computer workstation 44 and the client process (not shown) displays the game for the matching instances in a separate display pane 130 in the dialog box 70, as shown in Figures 11 and 12 relating to ring games and Sit and Go games, respectively. The player is then able to click any one of the game entries in the display pane 130, which causes the client process (not shown) to display the progress of the selected game instance on the computer workstation 44. If the selected game instance has one or more vacant seats, the player is able to join the game.

Figures 11 and 12 illustrate examples of configured player searches and corresponding search results. In Figure 11, the player has configured the following search parameters: - ring games of the Texas Hold'em variety, whether Fixed Limit, Pot Limit or No Limit games, with stakes between $5/$10 and $50/$100, which have four or more players, and which have an average pot size less than $500. The gaming server 42 has located thirteen instances of the poker game that match the search parameters and corresponding game data for these instances is displayed in the display pane 130 in the dialog box 70. In Figure 12, the player has configured the following search parameters:-Sit and Go games of the Texas Hold'em variety, whether Fixed Limit, Pot Limit or No Limit games, with buy-ins between $20 and $100 and with 10 or more entrants. The gaming server 42 has located nine instances of the poker game that match these search parameters, the corresponding game data for each of these instances being displayed in the display pane 130 of the dialog box 70.

If the player clicks the Quick Search icon 66 on the lobby page 60 and a search parameter file (not shown) is already stored on the computer workstation 44 (arising from a previous search conducted by the player) the dialog box 70 will be displayed with the various radio buttons, check boxes and drop-down lists pre-configured in accordance with the contents of the stored search parameter file. This means that the player only needs to click the SEARCH icon 128 in order to initiate a new search for desired instances of the poker game if the player's requirements are unchanged from the previous search. If the player wishes to modify the search in any way, it will be necessary for the player to modify the search parameters in the dialog box 70 as required, and the stored search parameter file (not shown) will be altered to contain the modified search parameters.

### Quick Start

The search facility of this disclosure may also take the form of a feature whereby when the gaming server finds a game instance that meet's the players preferences (i.e., search criteria), the gaming server directly connects the player with the game instance, either with or without an intervening confirmation step. A search facility including an automatic connection to a game instance meeting search criteria is referred to herein as a "quick start" feature, one example of which is described below for purposes of illustration and not limitation.

Referring now to Figure 13, another example of a lobby page 200 is shown. The lobby page 200 provides information as to a variety of poker games that are shown in a pane 202 on the lobby page. The poker games in this example are of the following types: Texas Hold'em, Omaha, Omaha Hi/Lo, 7-Card Stud, 5-Card Stud, Sit and Go poker tournaments, Multi-Table poker tournaments and private poker games. A player selects one of the types of poker game that is of interest and a further pane 204 on the lobby page 200 displays information on individual game instances of the selected game type. In this example, the pane 204 displays information on individual instances of poker games of the Texas Hold'em variety. The pane 204 shows statistics or data for each instance of the game, such as the name of the table, the table stakes, the number of available seats at the table, and the number of players currently seated at the table, the wagering limits, the average pot size, etc. The data in the pane 204 is essentially in the form of a page of data, wherein the amount of data to show in the pane 204 is greater than fits into the available space in the pane and scrolling is necessary to be able to view all the data in the page. In the example of Figure 13, data in the pane 204 spans multiple different pages and the pane 204 includes page icons 206 by means of which the player can select an additional page of data to view, go forward a page, etc.

When the computer workstation 44 accesses the server 42, it is provided with the main lobby page 200 shown in Figure 13. In order to locate an instance of the poker game to join, a player may use a navigation tree provided in the pane 202 of the lobby display. The player first selects the type of game in which to participate, for example, games of the Texas Hold'em variety in Figure 13. Once the player has traversed the navigation tree to a desired degree of resolution, a list of games having the desired characteristics is displayed in the pane 204, and the player is the required to select a particular instance of the game to join and in which to participate.

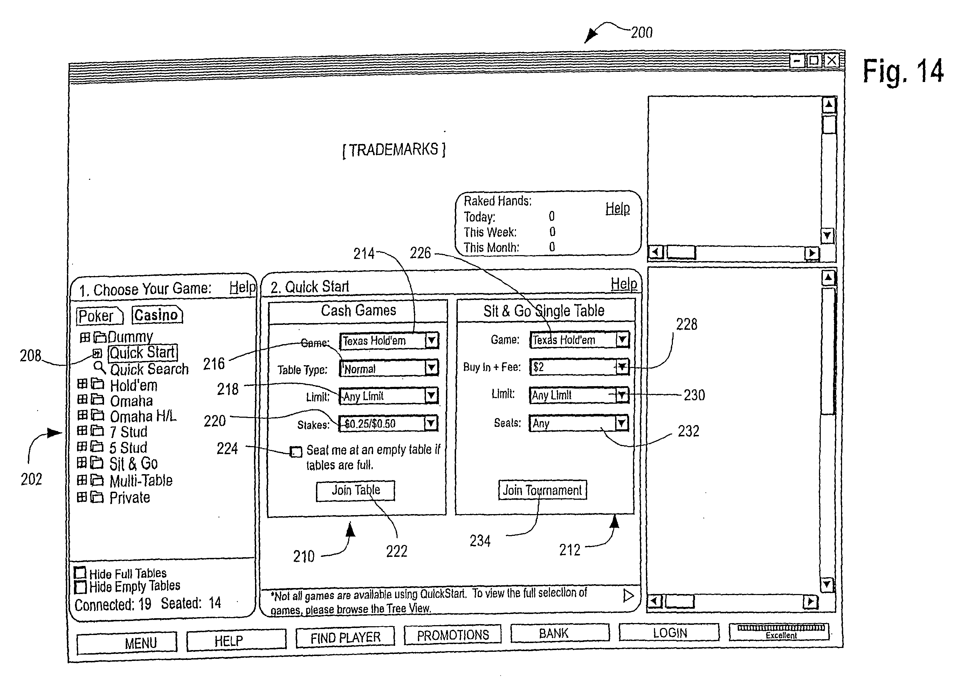

In order to enable the player to more quickly join an instance of the game, the pane 202 of the lobby page 200 contains an icon 208 labeled "Quick Start". When the player clicks the Quick Start icon 208, dialog boxes 210 and 212 replace the pane 204 in the lobby display, as shown in Figure 14. Dialog box 210 allows a player to configure characteristics of a type of ring game that the player wishes to join, while dialog box 212 allows the player to configure characteristics of a Sit and Go tournament in which the player wishes to participate. Such characteristics specified by the player in the dialog boxes 210 and 212 can be considered as search criteria, or, alternatively and equivalently, as a player preference profile.

In a preferred embodiment, once the player makes an initial selection of preferences using the dialog boxes 210 and/or 212, the resulting player preference profile is preferably stored in a permanent or semi-permanent form in the workstation such that it can be later recalled and transmitted to the gaming server without the user having to reenter the information, e.g., after the player has logged off of the gaming website. In one alternative embodiment, the profile could be stored on the network side, e.g., in a database accessible to the gaming server.

In order to commence play in a ring game, the player may configure the game parameters in the dialog box 210. Such a profile may consist of the following attributes in the representative embodiment shown in Figure 14, but others are possible as well:
● a game type, selected from drop-down list 214, in which the choices are Hold'em, Omaha, Omaha H/L, 7 Stud and 5 Stud, corresponding to the particular types of poker games previously discussed;
● a table type, selected from drop-down list 216, in which the choices include Beginner, Normal, Head to Head and Turbo;
● desired bet limits, selected from drop-down list 218, in which the choices are Fixed Limit, Pot Limit, No Limit and Any Limit; and
● desired table stakes, selected from drop-down list 220, in which the choices correspond to predefined table stakes ranging from $0.05/$0.10 to $50/$100.

Once the player has configured the game parameters (player preference profile) as desired, the player activates a "JOIN TABLE" icon 222 in the dialog box 210. Upon activation of the JOIN TABLE icon 222, the computer workstation 44 creates a player preference profile file (not shown) containing the game parameters that have been configured by the player in the dialog boxes, and stores the player preference profile file on a local storage device (not shown) such as a hard disk drive. The computer workstation 44 also transmits the player preference profile file (not shown) to the gaming server 42, which receives the file and searches the stored game instance data in the database 53 in order to locate an instance of the poker game that matches the player's preference profile contained in the file (not shown). As soon as the gaming server 42 finds a game instance that matches the player's game parameters and that has one or more vacant seats, a datagram is transmitted to the workstation containing data linking the workstation directly to the game instance. The client process on the computer workstation 44 displays that game instance to the player and causes the player to automatically join the game without any further intervention being required from the player. In one possible variation, an intermediate confirmation step is provided to seek confirmation from the player that they wish to play the displayed instance.

In the event that more than one game instance exists which matches to the player preference profile, each with an empty seat, the gaming server can execute one of a variety of algorithms to select a particular instance of the game for the workstation to join. One possible algorithm would be to join the player to the first game instance that is found which matches the search parameters. Another possible algorithm would be to randomly choose one game instance from all of the game instances found that satisfy the search parameters. Another possible algorithm would be to choose the game instance that matches the search parameters and that has the highest number of empty seats. Other algorithmic choices are possible.

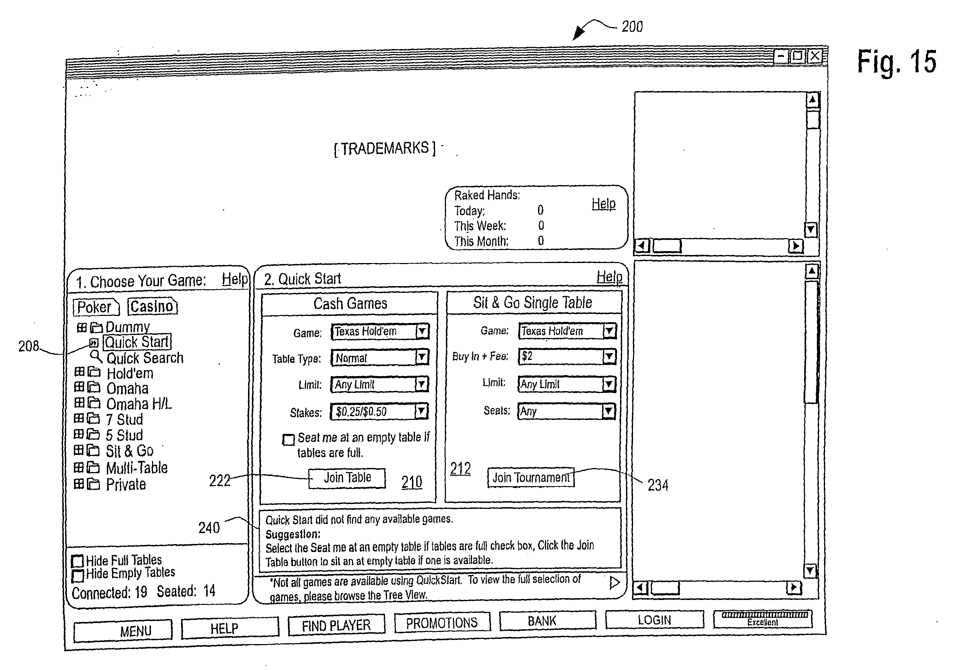

The dialog box 210 also contains a check box 224 that can be used by a player to determine what action the system 40 should take in the event that the gaming server 42 does not find any instance of the poker game that matches the player's preference profile contained in the player preference profile file (not shown). If the gaming server 42 does not find any ring game that matches the player's preference profile, or a matching game that has one or more vacant seats, and the player has not checked check box 224, the client process displays a warning message to the player as illustrated at 240 in Figure 15, e.g., "Quick Start did not find any available games." If, on the other hand, check box 224 is checked, and the server 42 has found one or more matching instances of the game, none of which have an empty seat, the gaming server 42 will send back a datagram to the client process that will cause the client process on the computer workstation 44 to display a game instance having an empty table and seats the player automatically at the table without any further intervention being necessary from the player.

The player may also start play at a Sit and Go tournament by means of a procedure that is similar to that described above in respect of starting play in a ring game. In particular, in order to commence play in a Sit and Go tournament, the player may configure the following tournament parameters in dialog box 212:
- a tournament type selected from drop-down list 226, in which the choices are Hold' em, Omaha, Omaha H/L, 7 Stud and 5 Stud;
- a desired buy-in and entry fee for the tournament, selected from drop-down list 228, in which the choices range from $1 to $1000;
- desired bet limits selected from drop-down list 230, in which the choices are Fixed Limit, Pot Limit, No Limit and Any Limit; and
- desired number of table seats in the tournament, selected from drop-down list 232, in which the choices are Heads Up, 6, 10, 6 or 10.

Once the player has configured the tournament parameters as desired, the player activates a "JOIN TOURNAMENT" icon 234 in the dialog box 212. Upon activation of the JOIN TOURNAMENT icon 234, the computer workstation 44 creates a tournament parameter file (not shown) containing the tournament parameters that have been configured by the player (essentially, another player preference profile), and stores the tournament parameter file on a local storage device (not shown) such as a hard disk drive. The computer workstation 44 also transmits the tournament parameter file (not shown) to the gaming server 42, which receives the tournament parameter file and searches the stored game instance data in the database 53 in order to locate an instance of the poker game that matches the player's tournament contained in the tournament parameter file (not shown). As soon as the gaming server 42 finds a Sit and Go tournament that matches the player's tournament parameters and that has one or more vacant seats, it causes the client process on the computer workstation 44 to display that game instance to the player and causes the player to automatically join the tournament without further intervention from the player. If the gaming server 42 does not find any Sit and Go tournament that matches the player's tournament parameters, or a Sit and Go tournament that is not full, the client process displays a warning message to the player as illustrated at 240 in Figure 15.

If the player activates the JOIN TABLE icon 222 and a player preference profile file (not shown) is already stored on the computer workstation 44 (arising from a previous Quick Start operation performed by the player), the dialog box 210 will be displayed on the computer workstation 44 with the various input fields (i.e. drop-down lists and check boxes, etc.) pre-populated in accordance with the contents of the game parameter file (not shown). This means that a player whose requirements are unchanged from previous ones only needs to click the JOIN TABLE icon 222 in order to automatically join a ring game having the desired characteristics, thereby minimizing the time required to commence play at a poker game. The player may modify the pre-populated default parameters in dialog box 210 as required, and the stored player preference profile file (not shown) will be updated to contain the modified game parameters. Analogously, the tournament parameters in the tournament parameter file (not shown) will be used as default parameters in dialog box 212 until subsequently changed by the player.

While a number of exemplary aspects and embodiments have been discussed in detail, those of skill in the art will recognize various modifications, permutations, additions and sub-combinations thereof as being present in the disclosure. For example, the details of the user interface presentation of a search facility or quick start feature may vary depending on the preference of the designer and the desired "look and feel" of the user interface. Still further, additional or different search criteria or player preferences may be provided to the user without departure of the scope of this disclosure. Additionally, as used in the claims, the term "game instance" is meant to be encompassing of both a game instance, such as a virtual poker table, as well as a tournament instance in which a player plays a game instance in the form of a tournament. It is intended that the following appended claims and claims hereafter introduced are interpreted to include all such modifications, permutations, additions and sub-combinations as are within their true scope.

## Claims

1. A gaming application executable by a computer workstation for playing on-line games, the workstation linked to a central gaming server facilitating the playing of the on-line games over a network, the gaming application comprising a set of machine readable instructions stored on a memory device, said instructions comprising:
a) instructions for presenting on the workstation a search facility whereby a player can enter search criteria identifying attributes of on-line games of interest to the player;
b) instructions for transmitting the search criteria to the central gaming server, whereby the central gaming server may search a database of current game instances to identify a set of at least one game instances meeting the search criteria.

2. The gaming application of claim 1, wherein the search criteria are stored in a memory in the workstation, and wherein the gaming application displays a search icon, and in the event that search criteria are stored in memory and the search icon is selected by the player, the instructions b) transmit the stored search criteria to the gaming server.

3. The gaming application of claim 1 or 2, wherein the search facility further comprises a quick start feature whereby the user may indicate they wish to be directed automatically to a game instance.

4. The gaming application of claims 1, 2 or 3, wherein the search criteria comprise at least one of the following: a class of games, a game type, a pot size, bet limits, table stakes, a number of players in the instance of the game, and a number of seats in a game tournament.

5. The gaming application of claim 4, wherein the search criteria comprises a class of games, and wherein the class of games comprises ring-type games and sit and go games.

6. The gaming application of any preceding claim, wherein the game instances comprise wager games.

7. The gaming application of any preceding claim, wherein the gaming server responds to the transmission of the search criteria by returning one or more pages of game instances meeting the search criteria.

8. The gaming application of any preceding claim, wherein the search facility is presented on a lobby page of a virtual casino.

9. The gaming application of claim 3, further comprising instructions for presenting on the display (1) a first field comprising a navigation tree wherein a player may select a type of game, (2) a second field comprising a display of virtual instances of games of the type selected in the first field, (3) an icon associated with the search facility, and (4) an icon associate with the quick start feature.

10. A method of facilitating selection of games by remotely located player using a computer workstation, the workstation linked over a computer network to a central gaming server, comprising the steps of:
receiving at the gaming server a search request from the workstation, the search requests including search criteria data identifying attributes of on-line games of interest to the player;
the gaming server searching a database of current on-line game instances for instances meeting the search criteria; and
responsively providing to the workstation a datagram identifying one or more on-line game instances meeting the search criteria.

11. The method of claim 10, wherein the search request includes a quick start feature indicating that the player wishes to be directed automatically to a game instance meeting the search criteria.

12. The method of claim 10 or 11, wherein the search criteria comprise at least one of the following: a class of games, a game type, a pot size, bet limits, table stakes, a number of players in the instance of the game, and a number of seats in a game tournament.

13. The method of claim 10, 11 or 12, wherein the search criteria comprises a class of games, and wherein the class of games comprises ring-type games and sit and go games.

14. The method of claims 10 to 13, wherein the game instances comprise wager games.

15. The method of claims 10 to 14, wherein the datagram comprises one or more pages of game instances meeting the search criteria.

16. A method of automatically connecting a player with an on-line instance of a game, the player using a computer workstation linked to a central gaming server over a computer network, comprising the steps of:
presenting to the player a display on the workstation wherein the player may enter one or more player preferences identifying attributes of games of interest to the player;
sending a first datagram to the gaming server containing the player preferences;
receiving the first datagram at the gaming server and responsively searching through a database containing instances of on-line games to identify at least one game instance meeting the player preferences;
returning a second datagram to the workstation automatically directing the player to a game instance identified by the gaming server meeting the player preference.

17. The method of claim 16, wherein player preferences entered at the workstation are stored on the workstation, wherein the player may later select an icon indicating they wish to join an instance of a game meeting the stored player preferences and such selection causes a third datagram to be sent to the gaming server to prompt selection by the gaming server of an instance of a game meeting the player preferences.

18. The method of claim 16 or 17, further comprising the step of displaying a prompt to the player on the workstation seeking confirmation that the player wishes to join a game instance identified by the gaming server.

19. The method of claim 16, 17 or 18, wherein the player preferences comprise at least one of:
a class of games, a game type, table type, desired bet limits, desired table stakes, buy-in amount, a number of players in the instance of the game, and a number of seats in a game tournament.

20. The method of claims 16 to 19, wherein the display further comprises an icon that can be used by a player to determine what action the gaming server should take in the event that the gaming server does not find any instances of games that match the player preferences.

21. The method of claim 20, wherein the icon indicates that the player wishes to be seated at an empty instance of a game meeting the player preferences.

22. A central gaming system facilitating searching of on-line games for play by a player using a remotely located workstation, comprising:
a database storing data representing multiple instances of on-line games;
a gaming server comprising a processing unit executing machine readable instructions, wherein the processing unit searches the database in response to search criteria transmitted to the gaming sever from the workstation to identify instances of games of interest to the player as specified in the search criteria;
the gaming server transmitting a datagram to the workstation identifying at least one instance of a game meeting the search criteria.

23. The system of claim 22, wherein the gaming server is operative to join the workstation to an instance of a game meeting the search criterion automatically.

24. The system of claim 22 or 23, wherein the search criteria comprise at least one of the following: a class of games, a game type, a pot size, bet limits, table stakes, a number of players in the instance of the game, and a number of seats in a game tournament.

25. The system of claim 22, 23 or 24, wherein the search criteria comprises a class of games, and wherein the class of games comprises ring-type games and sit and go games.

26. The system of claims 22 to 25, wherein the game instances comprise on-line wager games.

27. The system of claims 22 to 26, wherein the gaming server responds to the transmission of the search criteria by returning one or more pages of game instances meeting the search criteria.

28. A computer workstation programmed with a gaming application as claimed in any of claims 1 to 9.
